# EUROPÄISCHE PATENTSCHRIFT

(11) **EP 2 850 721 B1**
(45) Veröffentlichungstag und Bekanntmachung des Hinweises auf die Patenterteilung: **13.07.2016**
(21) Anmeldenummer: 13721783.2
(22) Anmeldetag: 13.05.2013
(51) Int. Cl.: H02K 5/128

(54) **SPALTTOPF UND MAGNETKUPPLUNGSANORDNUNG MIT EINEM SOLCHEN SPALTTOPF**
SEPARATING CAN, AND MAGNETIC CLUTCH ARRANGEMENT HAVING A SEPARATING CAN OF THIS TYPE
CHEMISE D'ENTREFER ET ENSEMBLE À ENTRAÎNEMENT MAGNÉTIQUE ÉQUIPÉ D'UNE TELLE CHEMISE D'ENTREFER

(30) Priorität: 14.05.2012 DE 102012009654
(43) Veröffentlichungstag der Anmeldung: 25.03.2015
(73) Patentinhaber: Dickow Pumpen KG, 84478 Waldkraiburg (DE)
(72) Erfinder: KONRAD, Jürgen, 84559 Kraiburg (DE); RUSS, Andreas, 84478 Waldkraiburg (DE)
(74) Vertreter: Fischer, Matthias
(86) Internationale Anmeldenummer: PCT/EP2013/059826
(87) Internationale Veröffentlichungsnummer: WO 2013/171165

(56) Entgegenhaltungen:
- EP-B1- 0 372 838
- CA-A1- 1 129 469
- DE-B3- 10 361 378

## Beschreibung

Die vorliegende Erfindung betrifft einen Spalttopf, insbesondere zum Einbau in eine Magnetkupplungsanordnung, mit einem Boden, einem Deckelflansch, einer Innenhülle und einer die Innenhülle umgebenden Außenhülle, welche beide zwischen dem Boden und dem Deckelflansch eingespannt sind, sowie eine Magnetkupplungsanordnung mit einem solchen Spalttopf.

Aus dem europäischen Patent EP 0 372 838 B1 ist ein verlustarmes magnetisches Antriebssystem bekannt, bei welchem ein Spalttopf mit einer einstückigen zylindrischen Außenhülle eingesetzt wird, welche mit sich längs erstreckenden Schlitzen versehen ist. Lamellenartig geschichtete Ringe der Innenhülle werden über einen Deckelflansch gegen die Außenhülle verspannt werden

Das deutsche Patent 103 61 378 B3 lehrt eine Magnetkupplungsanordnung zur Übertragung eines Drehmomentes, bei welcher ein als Schweißkonstruktion ausgebildeter Spalttopf zum Einsatz kommt, dessen einstückige zylindrische Außenhülle mit Längskerben versehen sind und dessen Innenhülle als einteiliges schraubenfederartig verlaufendes Profilelement ausgebildet ist.

An der technischen Funktion der beiden zuvor genannten Spalttöpfe ist zu bemängeln, dass durch die äußere Hülle zusätzliche Wirbelstromverluste auftreten und bei drehzahlgeregelten Antrieben die Gefahr droht, dass man sich im Eigenfrequenzbereich der äußeren Hülle bewegt. Dadurch werden Dauerschwingungen erzeugt, welche zum Bruch der einzelnen, durch Spalte oder Kerben voneinander getrennten Längselemente der Außenhülle führen können. Daneben ist kein Trockenlauf möglich, da bei hohen Drehzahlen durch die äußere Hülle Wirbelstromverluste auftreten, welche den Spaltkopf stark aufheizen können.

Die CA 1 129 469 zeigt eine Magnetkupplungsanordnung, bei der ein aus Lamellen bestehender Spalttopf durch einzeln lösbare Zugelemente zusammengepresst wird, wobei die Zugelemente nicht in dem Spalttopf integriert sind. Aus der DE 103 61 378 B3 ist ein Spalttopf gemäß dem Oberbegriff von Anspruch 1 bekannt.

Die oben genannten Spalttöpfe erfordern einen erhöhten Fertigungs- und Montageaufwand, aufgrund der Fertigung der einzelnen Segmente oder der Endlosschraubenfeder sowie der Außenhülle. Als Abdichtung der Segmente bzw. der Endlosschraubenfeder sind Dichtungsmaterialien erforderlich.

Der Erfindung liegt die Aufgabe zugrunde, einen Spalttopf vorzuschlagen, bei dem die aus dem Stand der Technik bekannten Nachteile vermieden oder zumindest stark verringert werden.

Die Aufgabe wird gelöst mit einem Spalttopf gemäß Anspruch 1. Hierbei ist der Spalttopf, der insbesondere zum Einbau in eine Magnetkupplungsanordnung geeignet ist, mit einem Boden mit einem äußeren Bodendach, einem federelastischen Bodenspannring, einem Deckelflansch, einer Innenhülle und einer die Innenhülle umgebenden Außenhülle, welche beide zwischen dem Boden und dem Deckelflansch eingespannt sind, versehen, wobei die Außenhülle aus einer Vielzahl von einzeln lösbaren Zugelementen besteht, wobei der Bodenspannring Spannlippen aufweist, welche gegen das äußere Bodendach federnd vorgespannt angeordnet sind und wobei das äußere Bodendach zur Längsachse des Spalttopfs einen Winkel α kleiner 90° einnimmt. Führte bei den aus dem Stand der Technik bekannten Spalttöpfen der Bruch eines einzigen Längselementes der Außenhülle sofort zum Totalschaden des Spalttopfs, wenn nicht weiterer Bauteile einer Magnetkupplungsanordnung, so lässt sich mit der Anordnung der einzeln lösbaren Zugelemente der Außenhülle des erfindungsgemäßen Spalttopfs ein gebrochenes Zugelement einzeln demontieren und ersetzen und damit vorteilhafterweise großer Schaden vermeiden. Die gegen das Bodendach vorgespannt angeordneten Spannlippen tragen in vorteilhafter Weise zur Aufnahme wechselnder Belastungen der erfindungsgemäß innendruckentlasteten Verbindung Deckelflansch - Segmentspalttopf - Boden - Bodenspannring bei und gewährleisten eine bleibende flüssigkeitsdichte Verbindung. Jegliche Biegebelastung wird verhindert bzw. tritt nicht auf. Hervorzuheben ist auch der Vorteil, dass bei dem erfindungsgemäßen Spalttopf der federelastische Bodenspannring sowie die Zugelemente nicht produktberührt sind und damit u. a. eine längere Standzeiten haben.

In einer vorteilhaften Ausbildung der Erfindung sind die Zugelemente als Zugankerschrauben aus hochfesten Metallen ausgebildet. Allein aufgrund dieser erfindungsgemäßen Ausbildung ist ein Bruch, wie zuvor besprochen, allerdings äußerst selten zu befürchten.

In noch einer vorteilhaften Ausbildung der Erfindung sind die Zugelemente als Zugankerschrauben aus hochfesten Leichtmetallen mit hohem spezifischem elektrischen Widerstand ausgebildet. Auch diese erfindungsgemäße Ausbildung lässt einen Bruch, wie zuvor besprochen, äußerst selten befürchten.

In einer weiteren vorteilhaften Ausbildung der Erfindung ist die Innenhülle des Spalttopfs als im Wesentlichen zylindrisches Rohr aus einem Material mit hohem spezifischem elektrischem Widerstand ausgebildet. Dadurch ergibt sich vorteilhafterweise eine zusätzliche Reduzierung von Wirbelstromverlusten, die im Einzelfall sogar bis auf Null absinken können.

In noch einer weiteren vorteilhaften Ausbildung der Erfindung besteht die Innenhülle des Spalttopfs aus Kunststoff, Faserverbundstoff oder Zirkonoxid.

In einer anderen vorteilhaften Ausbildung der Erfindung ist der Spalttopf dadurch gekennzeichnet, dass zwischen der Außenhülle und der Innenhülle eine Schwingungsdämpfungseinrichtung für die Zugelemente angeordnet ist.

Die erfindungsgemäßen Zugelemente unterliegen einer gewissen Eigenfrequenz. Diese ist abhängig vom Innendruck des Spalttopfes und der Vorspannkraft der Schraubenverbindung der Zugelemente sowie dem Schraubenwerkstoff. Um diese Eigenfrequenz in einen unkritischen Bereich zu verlagern, bzw. wesentlich zu erhöhen, kann der Bereich zwischen Zugelementen und der Innenhülle mit einer z. B. als federndes Element ausgebildeten Schwingungsdämpfungseinrichtung als Abstützung versehen werden. Diese kann vorteilhafterweise sowohl über den gesamten Topfbereich als auch nur in bestimmten Bereichen angeordnet werden.

In einer weiteren vorteilhaften Ausbildung der Erfindung ist die Schwingungsdämpfungseinrichtung als Gummiband ausgebildet, womit vorteilhafterweise eine sehr kostengünstige Variante zur Verfügung steht.

Die Aufgabe wird des Weiteren gelöst mit einem Spalttopf gemäß Anspruch 7, nämlich einer Magnetkupplungsanordnung, welche durch einen Spalttopf nach einem der Patentansprüche gekennzeichnet ist.

Die Erfindung wird nachfolgend anhand eines bevorzugten Ausführungsbeispiels mit Hilfe der Zeichnung näher erläutert.
- Fig. 1: zeigt schematisch ein Schnittbild einer Pumpe, in welcher der erfindungsgemäße Spalttopf angeordnet in einer Magnetkupplungsanordnung dargestellt ist.
- Fig. 2: zeigt schematisch einen erfindungsgemäßen Spalttopf im Schnitt.
- Fig. 2y: zeigt schematisch eine Einzelheit Y der Fig. 2 stark vergrößert.
- Fig. 2z: zeigt schematisch eine Einzelheit Z der Fig. 2 stark vergrößert.
- Fig. 3: zeigt schematisch eine weitere Variante des erfindungsgemäßen Spalttopfs im Schnitt, Blick in das Innere des Spalttopfs.
- Fig. 3x: zeigt schematisch eine Einzelheit X der Fig. 3 stark vergrößert.
- Fig. 4: zeigt beispielhaft eine perspektivisch dargestellte Hälfte eines Spalttopfes.

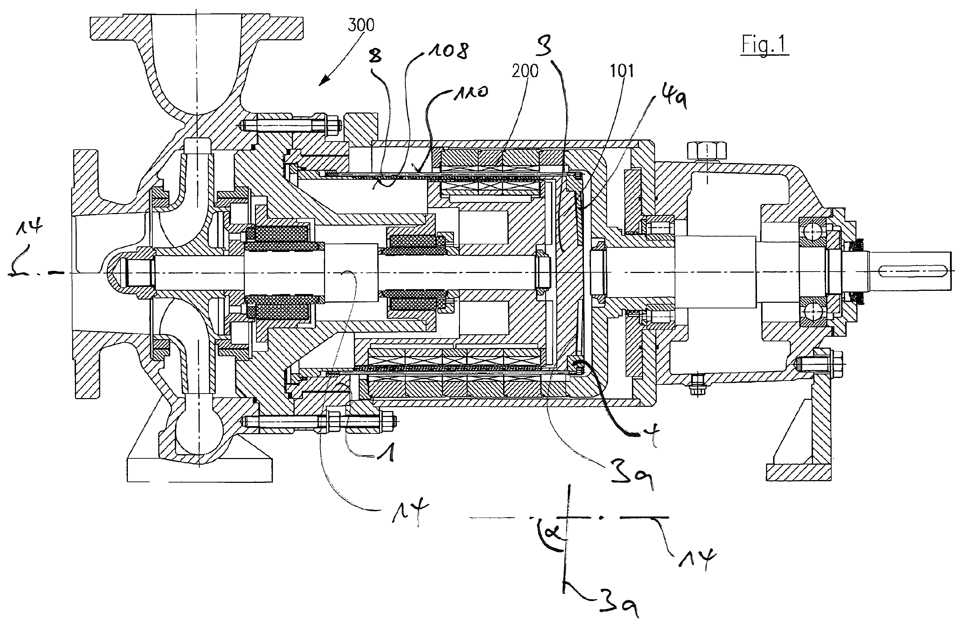

Fig. 1 zeigt einen Spalttopf 101, montiert in einer Magnetkupplungsanordnung 200 einer Pumpe 300, wobei auf der linken Seite der Fig. 1 die Hydraulik und auf der rechten Seite die Antriebsseite der Pumpe dargestellt ist.

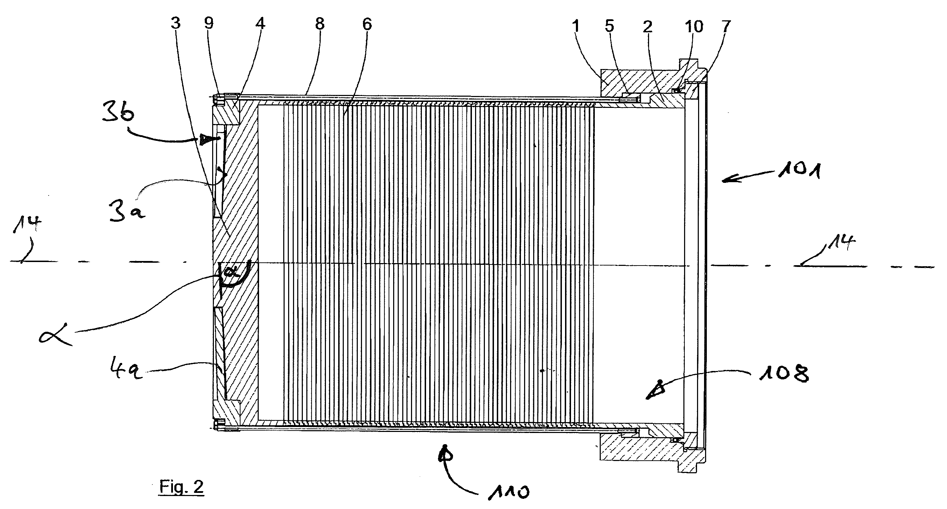

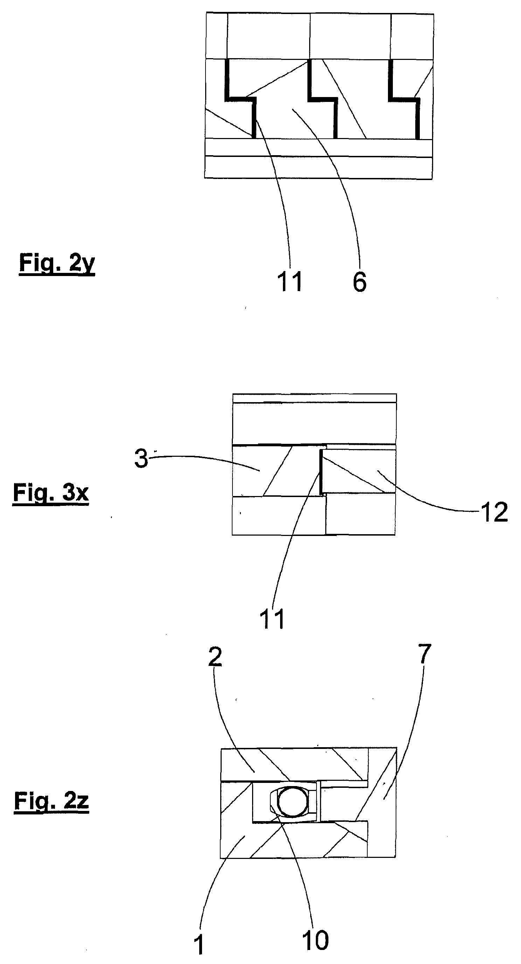

Fig. 2 zeigt einen erfindungsgemäßen Spalttopf 101 im Schnitt, wobei man den Blick in das Innere des Spalttopfes 101 erkennt. Einzelne, eine Innenhülle 108 bildende Segmentringe 6 sind mit einem Halterring 2 und einem Boden 3 sowie einer Außenhülle 110, welche aus einer Vielzahl von einzeln lösbaren Zugelementen 8, hier als Zugankerschrauben 114 eingesetzt, gebildet ist, zu einem topfförmigen Gebilde, dem Spalttopf 101 zusammengesteckt. Die elektrische Isolierung der einzelnen Segmentringe 6 gegeneinander erfolgt durch Dichtungselemente 11 gemäß Fig. 2y. Die Zentrierung von Halterring 2, Boden 3 und Segmentringen 6 wird durch einen Absatz, gezeigt in Fig. 2y, gewährleistet.

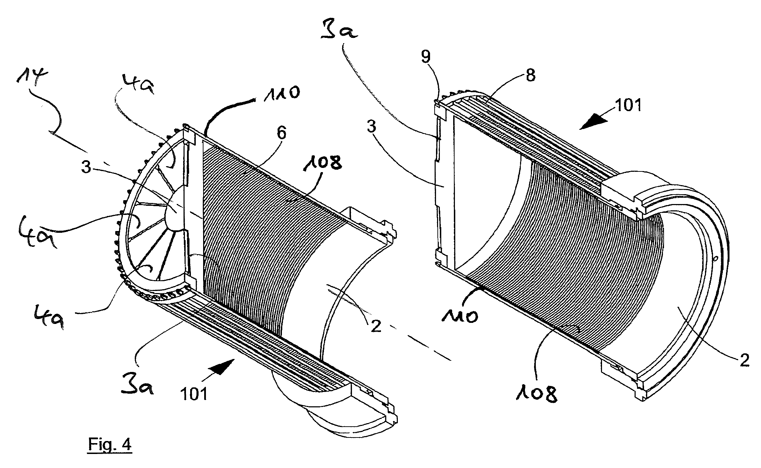

Allein durch das Zusammenziehen der beschriebenen Bauteile entsteht noch keine innendruckbelastbare und flüssigkeitsdichte Verbindung. Diese wird erst durch den zusätzlichen Anbau eines Bodenspannringes 4, Flanschspannrings 5 sowie deren kraftschlüssige Verbindung durch Stiftschrauben 8 und Muttern 9 erreicht. Der Flanschspannring 5 wird in einem Flansch 1 geführt, der gleichzeitig die Verbindung zu einem Aufnahmebauteil darstellt. Zusätzlich werden die inneren Bauteile von einem Gewindering 7 gehalten und durch einen Nutring 10 (Fig. 2z) von innen her abgedichtet. Gut zu erkennen sind vom Bodenspannring 4 radial zur Längsachse 14 orientierte Spannlippen 4a, welche gegen das äußere Bodendach 3a federnd vorgespannt angeordnet sind. Sie drücken im dem der Längsachse 14 nahen Bereich federnd gegen das äußere Bodendach 3a, welches zur Längsachse 14 des Spalttopfs 1 einen Winkel α kleiner 90° einnimmt. Vorteilhafte Folge hiervon ist, dass die Spannlippen 4a, ausgenommen ihre radial nach innen weisenden Enden keine Berührung mit dem Bodendach 3a haben. Zwischen dem Bodendach 3a und den Spannlippen 4a ist also eine gewisse "Spannluft", mit den zuvor geschilderten Vorteilen. Diese Anordnung ist in der perspektivischen Darstellung gemäß Fig. 4 auch leicht nachzuvollziehen. In der linken Hälfte des dort abgebildeten Spalttopfs 1 sind beispielhaft sechs sich vom Bodenspannring 4 radial zur Längsachse erstreckende Spannlippen 4a zu erkennen, welche auf das Bodendach 3a drücken. Auch Fig. 1 zeigt die zur Längsachse 14 im Winkel α kleiner 90° abgewinkelt ausgebildete Form des Bodendachs 3a.

Die Auslegung der Stiftschrauben 8 hinsichtlich Größe und Anzahl erfolgt entsprechend dem zulässigen Druck, Temperatur und Schraubenwerkstoff. Um ein vorzeitiges Lockern der Schraubenverbindung zu verhindern bzw. eine ausreichende Vorspannkraft aufrecht zu erhalten, sind die Muttern 9 mit einem zweckmäßig definierten Drehmoment angezogen und zusätzlich durch die federnde Ausführung des Bodenspannrings 4 vorgespannt.

Ausschlaggebend für die flüssigkeitsdichte Ausführung der einzelnen Segmente 6 ist eine ausreichende Flächenpressung des gewählten Dichtungsmaterials sowohl in drucklosem als auch in druckbeaufschlagtem Zustand des Segment-Spalttopfs. Im drucklosen Zustand wird dies alleine durch die Vorspannkraft der Schraube gewährleistet. Durch die Wahl der Flächenverhältnisse in der Konstruktion kommt es auch im druckbeaufschlagten Zustand zu keiner unzulässig hohen Flächenpressung auf die Dichtelemente.

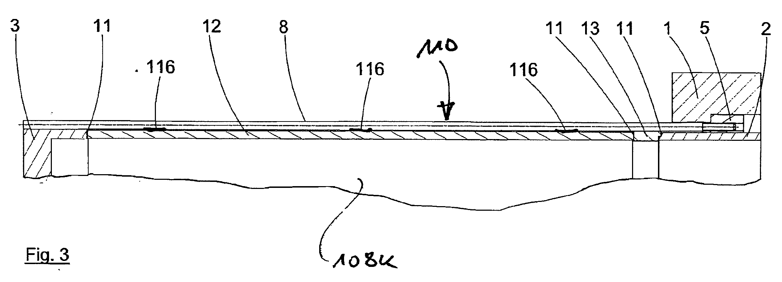

Fig. 3 zeigt eine alternative Ausführung der Erfindung. Hier wird anstelle von einzelnen Segmentringen 6 der Innenhülle ein rohrartiges Bauteil oder Rohr 12 als Innenhülle 108k eingesetzt. Die Anordnung der Außenhülle 110 entspricht der des vorher erläuterten Ausführungsbeispiels. Das Rohr 12 ist vorteilhafterweise aus einem Werkstoff mit einem hohen spezifischen elektrischen Widerstand gefertigt. Der Werkstoff kann Keramik, z.B. Zirkonoxid oder Faserverbundwerkstoff oder Kunststoff etc. sein. Beim Einsatz dieser Materialien reduzieren sich die Wirbelstromverluste erheblich. Der Wirkungsgrad des gesamten Aggregates steigt, und die Anzahl der Dichtelemente lässt sich vorteilhafterweise auf ein Minimum reduzieren. Ferner kommt es bei dieser Konstruktion zu keinerlei Kerbwirkungen auf das rohrartige Bauteil durch die im Inneren des Spalttopfes herrschenden Druckverhältnisse.

Unter Beibehaltung der genannten vorhandenen Bauteile, d. h. ohne Änderung der Grundkonstruktion ist die Innenhülle 108k als Rohr 12 gegen eine Innenhülle aus Segmentringen 6 (siehe Ausführungsbeispiel gemäß Fig. 2) austauschbar. Die Verbindung des Rohrs 12 zu dem Boden 3 und dem Haltering 2 erfolgt über einen Zwischenring 13 und gekammerte Dichtungselemente 11 (Fig. 3x). Dies ermöglicht und vereinfacht eine keramikgerechte Konstruktion.

Die Stiftschrauben 8 unterliegen einer gewissen Eigenfrequenz. Diese ist abhängig vom Innendruck des Segment-Spaltkopfes und der Vorspannkraft der Schraubenverbindung sowie dem Schraubenwerkstoff. Um diese Eigenfrequenz in einen unkritischen Bereich zu verlagern, bzw. wesentlich zu erhöhen, kann der Bereich zwischen Stiftschrauben 8 und den Segmentringen 6 mit einer als elastisches bzw. federndes Element (z. B. Gummi) ausgebildeten Schwingungsdämpfungseinrichtung 116 als Abstützung versehen werden. Diese kann sowohl über den gesamten Topfbereich als auch nur in bestimmten Bereichen angeordnet werden.

In Fig. 4 ist beispielhaft eine perspektivisch dargestellte Hälfte eines Spalttopfes 101, links von unten, also vom Boden 3 her und rechts von oben, also vom Deckelflansch 1 her gezeigt. Man blickt jeweils hauptsächlich ins Innere des Spalttopfes 101, wobei die Innenhülle 108 und die Außenhülle 110 gut zu erkennen sind. Auch die außen angeordneten Spannschrauben 8 und Gegenmuttern 9 der Außenhülle 110 sind gut zu erkennen.

### Bezugszeichen

- α: Winkel
- 1: Flansch
- 2: Haltering
- 3: Boden
- 3a: Bodendach
- 3b: Abstand
- 4: Bodenspannring
- 4a: Spannlippe
- 5: Flanschspannring
- 6: Segmentring
- 8: Zugelement
- 9: Mutter
- 10: Nutring
- 11: Dichtungselement
- 12: Rohr
- 13: Zwischenring
- 14: Längsachse
- 101: Spalttopf
- 108: Innenhülle
- 108k: Innenhülle
- 110: Außenhülle
- 114: Zugankerschraube
- 116: Schwingungsdämpfungseinrichtung
- 200: Magnetkupplungsanordnung
- 300: Pumpe

## Patentansprüche

1. Spalttopf (101), insbesondere zum Einbau in eine Magnetkupplungsanordnung (200), mit einem Boden (3) mit einem äußeren Bodendach (3a), einem federelastischen Bodenspannring (4), einem Deckelflansch (1), einer Innenhülle (108; 108k) und einer die Innenhülle (108; 108k) umgebenden Außenhülle (110), welche beide zwischen dem Boden (3) und dem Deckelflansch (1) eingespannt sind, **dadurch gekennzeichnet, dass** die Außenhülle (110) aus einer Vielzahl von einzeln lösbaren Zugelementen (8) besteht, dass der Bodenspannring (4) Spannlippen (4a) aufweist, welche gegen das äußere Bodendach (3a) federnd vorgespannt angeordnet sind und dass das äußere Bodendach (3a) zur Längsachse (14) des Spalttopfs (101) einen Winkel α kleiner 90° einnimmt.

2. Spalttopf (101) nach Anspruch 1, **dadurch gekennzeichnet, dass** die Zugelemente als Zugankerschrauben (8) oder Stiftschrauben aus hochfesten Metallen ausgebildet sind.

3. Spalttopf (101) nach Anspruch 1 oder 2, **dadurch gekennzeichnet, dass** die Zugelemente als Zugankerschrauben (8) oder Stiftschrauben aus Leichtmetallen mit einem hohen spezifischen elektrischen Widerstand ausgebildet sind.

4. Spalttopf (101) nach Anspruch 1, 2 oder 3, **dadurch gekennzeichnet, dass** die Innenhülle (108k) aus einem im Wesentlichen zylindrischen Rohr (12) aus einem Material mit hohem spezifischem elektrischen Widerstand besteht.

5. Spalttopf (101) nach Anspruch 4, **dadurch gekennzeichnet, dass** die Innenhülle (108k) aus Kunststoff, Faserverbundwerkstoff oder Keramik, vorzugsweise Zirkonoxid besteht.

6. Spalttopf (101) nach einem der Ansprüche 1 bis 5, **dadurch gekennzeichnet, dass** zwischen der Außenhülle (110) und der Innenhülle (108) eine Schwingungsdämpfungseinrichtung (116) für die Zugelemente (8) angeordnet ist.

7. Spalttopf (101) nach einem der vorhergehenden Ansprüche, **dadurch gekennzeichnet, dass** die Schwingungsdämpfungseinrichtung (116) als elastisches Element (116) ausgebildet ist.

8. Magnetkupplungsanordnung (200), **gekennzeichnet durch** einen Spalttopf (101) nach einem der vorhergehenden Ansprüche.

## Claims

1. A separating can (101), particularly for inclusion in a magnetic coupling assembly (200), having a base (3) with an outer base top (3a), a resilient base clamping ring (4), a lid flange (1), an inner shell (108; 108k) and an outer shell (110) surrounding the inner shell (108; 108k), both shells being clamped between the base (3) and the lid flange (1), **characterized in that** said outer shell (110) consists of a plurality of individually releasable tension elements (8), wherein the base clamping ring (4) has clamping lips (4a) arranged spring loaded against the outer base top (3a), and wherein the outer base top (3a) assumes an angle α with respect to the longitudinal axis (14) of the separating can (101) of less than 90 DEG .

2. The separating can (101) as set forth in claim 1, **characterized in that** said tension elements are configured as tension rod bolts (8) or studs made of high-strength metals.

3. The separating can (101) as set forth in claim 1 or 2, **characterized in that** said tension elements are configured as tension rod bolts (8) or studs made of light metals having a high specific electrical resistance.

4. The separating can (101) as set forth in claim 1, 2 or 3, **characterized in that** said inner shell (108k) consists of a substantially cylindrical tube (12) made of a material having a high specific electrical resistance.

5. The separating can (101) as set forth in claim 4, **characterized in that** said inner shell (108k) is made of a plastic, fiber-reinforced composite or ceramic material, preferably zinc oxide.

6. The separating can (101) as set forth in any of the claims 1 to 5, **characterized in that** between said outer shell (110) and said inner shell (108) a vibration damping means (116) is disposed for the tension elements (8).

7. The separating can (101) as set forth in any of the preceding claims, **characterized in that** said vibration damping means (116) is configured as an elastic element (116).

8. A magnetic coupling assembly (200) **characterized by** a separating can (101) as set forth in any of the preceding claims.

## Revendications

1. Chemise d'entrefer (101), en particulier destinée à être intégrée dans une structure d'accouplement magnétique (200) avec un fond (3), un couvercle de fond extérieur (3a), une bague de serrage de fond élastique (4), une bride de couverture (1), une enveloppe intérieure (108; 108k) et une enveloppe extérieure (110) entourant l'enveloppe intérieure (108 ; 108k) qui, toutes deux, s'étendent entre le fond (3) et la bride de couverture (1) **caractérisée en ce que** l'enveloppe extérieure (110) se compose d'une pluralité d'éléments de traction individuellement amovibles (8), que la bague de serrage de fond (4) comprend des lèvres de serrage (4a), lesquelles sont appliquées de manière élastique contre le couvercle de fond extérieur (3a) en précontrainte et que le couvercle de fond extérieur (3a) forme un angle α inférieur à 90° par rapport à l'axe longitudinal (14) de la chemise d'entrefer (101).

2. Chemise d'entrefer (101) selon la revendication 1, **caractérisée en ce que** les éléments de traction sont formés de vis de tirant (8) ou de boulons filetés en métaux hautement résistants.

3. Chemise d'entrefer (101) selon la revendication 1 ou 2, **caractérisée en ce que** les éléments de traction sont formés de vis de tirant (8) ou de boulons filetés en métaux légers avec une résistance électrique spécifique élevée.

4. Chemise d'entrefer (101) selon la revendication 1, 2 ou 3, **caractérisée en ce que** l'enveloppe intérieure (108 k) se compose d'un tube pour l'essentiel cylindrique (12) dans un matériau possédant une résistance électrique spécifique élevée.

5. Chemise d'entrefer (101) selon la revendication 4, **caractérisée en ce que** l'enveloppe intérieure (108k) se compose de plastique, d'un matériau composite à base de fibres ou de céramique, de préférence en oxyde de zirconium.

6. Chemise d'entrefer (101) selon l'une des revendications 1 à 5, **caractérisée en ce qu'**un dispositif d'amortissement de vibrations (116) pour les éléments de traction (8) est placé entre l'enveloppe extérieure (110) et l'enveloppe intérieure (108).

7. Chemise d'entrefer (101) selon l'une des revendications précédentes, **caractérisée en ce que** le dispositif d'amortissement de vibrations (116) se constitue d'un élément élastique (116).

8. Structure d'accouplement magnétique (200), **caractérisée par** une chemise d'entrefer (101) selon l'une des revendications précédentes.
